Europäisches Patentamt

**European Patent Office**

Office européen des brevets

(19)

(11) Publication number: **0 074 217**
**A2**

# EUROPEAN PATENT APPLICATION

(21) Application number: **82304489.6**

(22) Date of filing: **25.08.82**

(51) Int. Cl.³: **G 09 F 3/18**
**H 01 B 7/36**

(30) Priority: **25.08.81 GB 8125886**

(43) Date of publication of application:
**16.03.83 Bulletin 83/11**

(84) Designated Contracting States:
**AT BE CH DE FR IT LI NL SE**

(71) Applicant: **N.V. RAYCHEM S.A.**
**Diestsesteenweg 692**
**B-3200 Kessel-lo(BE)**

(72) Inventor: **Selleslags, Frank K. A.**
**Keiberg 52**
**B-3044 Oudheverle(BE)**

(74) Representative: **Benson, John Everett et al,**
**Raychem Limited Morley House 26 Holborn Viaduct**
**London EC1(GB)**

(54) **Identification carrying means.**

(57) Identification carrying means 1 comprises a sheet of heat-resistant transparent material 2 secured to a sheet of adhesive 3 that is pressure-sensitive and heat-activatable, at least part of one major surface of the adhesive sheet 3 being covered by a release layer 7 to define a space between said sheets. Identification means such as a slip of paper can be placed in this space. The carrying means is placed on a substrate to which it becomes bonded by virtue of the pressure-sensitive nature of the adhesive. The bond is made stronger by heating.

*Fig. 1.*

# IDENTIFICATION CARRYING MEANS

## DESCRIPTION

This invention relates to identification-carrying means.

It is frequently necessary to be able mark flat surfaces or to distinguish between elongate bodies, for example, electrical cables or pipelines in an oil refinery where they are arranged in complex installations. With modern polyethylene jacketed cables and plastic pipes, it is not possible to effect identification simply by punching indicia, such as numbers and letters, on their outer surface.

Many of the techniques used to attach indicia to elongate or other substrates suffer from the disadvantage that they cause the thickness of the substrate to be increased abruptly in the region where the indicia are placed. A further problem is that the indicia are not secured tightly and may inadvertently be moved along the substrate or even be damaged when the substrate is handled.

In order to overcome these disadvantages, heat recoverable markers have been devised. These markers comprise heat-recoverable sleeves which can be printed with information, installed around the substrate, and shrunk-down into close contact with the substrate. Once shrunk they do not protrude greatly from the surface of the substrate, and cannot slide along the substrate. US Patent 3894731 describes a tubular version which must be slid over a free end of the substrate, and UK Patent Publication 205913 relates to a wrap-around version which can be used where no free end is available. In each case, however, it is radial shrinkage that produces the

0074217

close slip-proof fit. The sleeves may be internally coated with a heat-activatable adhesive to ensure a good bond to the substrate. Activation of the adhesive occurs in the same heating step that is carried out for recovery. In the wrap-around version a separate and distinct region of a contact adhesive is provided to hold the sleeve in the wrapped around configuration before recovery. In each of these versions the sleeve is printed using, for example, a typewriter and the printed characters on the sleeve are renderred permanent by heating.

A more complex multi-layer labelling system is disclosed in UK Patent Publication 2056403. The intention here is to simplify an older procedure whereby gummed label or labels having a pressure-sensitive adhesive thereon were marked, placed on a surface, and covered by a clear coating or clear plastic layer. This older technique apparently required many operations including careful alignment of the transparent overlay. In order to improve on this, what was proposed was a multi-layer system having the following components:

(a) a transparent cover sheet having a pressure-sensitive adhesive;

(b) a separator sheet on that adhesive;

(c) a label having an information surface facing (b) and having a pressure-sensitive adhesive on its other side;

(d) a removable backing sheet adhering apparently to the pressure-sensitive adhesive on the back of (b); and

(e) pressure-sensitive marking means on the separator sheet (b)

Although this arrangement is not entirely clear, especially as regards the position of the backing sheet (d), it is believed that printing the outside of the transparent cover causes a mark to be made on the label because of the marking means (e). Once this has been done, the separator sheet between the transparent cover and the label is removed. Finally, the backing sheet (d) is removed to allow the labelling system to be bonded, by the pressure-sensitive adhesive, to the support surface to be marked.

These adhesive systems have been found to have some disadvantages in certain circumstances and the technique actually used in the field at present uses pre-marked letter blocks which are slid into a transparent sleeve, and the sleeve is then secured with a pair of tie wraps around the cable to be identified. A tie wrap is provided at each end of the transparent sleeve, and it passes through the sleeve thereby blocking the previously open end and preventing the letter blocks from falling out, although separate end-stops can be used. The system is generally supplied as a kit which includes a number of letter blocks of each letter of the alphabet and of each number, a supply of transparent sleeves, tie wraps, end-stops, and a pair of pliers or similar tool.

It will be appreciated that such a kit contains many essential parts, and in particular requires a pre-determined supply of the correct letter blocks. Different letters and numbers will not be required with the same frequency and must be borne in mind by the workman when ordering his supply of letter blocks. Assembly of this marker system requires a certain amount of dexterity which, under the conditions often prevailing around pipelines and telecommunications cables, could be a significant disadvantage. Furthermore, the system can only be used around elongate substrates such as pipes or cables, since the use of tie wraps prevent its use on plain surfaces. In spite of these drawbacks this type of marking system has found acceptance and is a preferred marking technique in the telecommunications and related industries.

It is an object of the present invention to provide a means for conveniently marking a body including elongate bodies such as modern plastic cable sheaths and pipes, and plain surfaces for identification purposes. The new system can achieve permanent marking which need not protrude from the surface of the substrate, and which does not require a multi-part kit requiring pre-marked labels.

One aspect of the present invention provides identification-carrying means comprising a sheet of heat-resistant transparent material secured to a sheet of adhesive that is pressure-sensitive and heat-activatable, at least part of one major surface of the adhesive sheet being arranged, in use, to face the transparent sheet and being covered by a release layer to define a space between said sheets for receiving, in use, identification means.

The identification-carrying means is preferably supplied in roll form, the several components running lengthwise of the material of the roll. Individual markers can then be cut from the roll as desired. The identification means may also be supplied in roll form, the width of the roll should be not greater than the width of the space between the sheets.

In use, the release layer may be removed and the identification means inserted into the space between the transparent sheet and the sheet of adhesive material. The two sheets are then pressed together, the adhesive being pressure-sensitive effecting good bonding therebetween.

The resulting article may then be secured to a substrate body by pressing thereonto with the transparent sheet uppermost. Subsequently, the article can be more permanently secured to the substrate by heating to cause the adhesive to melt and flow thereby achieving the high peel and cohesive characteristics of a hot melt adhesive. Often the equipment required for heating, an air-gun or torch, will be readily to hand since it is envisaged that the labels will be of particular use in conjunction with heat-recoverable substrates where such tools are required.

It will be appreciated that one or both of the sheets of the identification-carrying means should be flexible enough to allow insertion of the identification means into the space therebetween.

Since the identification means can be completely enclosed between the adhesive and the transparent sheet, there is no requirement for it to be made of special material; paper will be a suitable material in most instances. However, it is preferred that the paper be UV and humidity resistant for severe environments.

The transparent sheet is heat-resistant to the extent that it is not substantially adversely affected by the heat applied to activate the heat-activatable adhesive.

Examples of materials suitable for the pressure sensitive heat-activatable adhesive are block copolymers such as styrene-isoprene-styrene optionally modified with a tackifier, tackified thermoplastic rubbers such as, for example, Inseal 5202 self adhesive strip manufactured by DRG Ltd (Dickinson Robinson), pressure sensitive silicone based adhesives, such as, for example SR529 silicone insulating resin manufactured by General Electric and hot-melt acrylic adhesives having a Tg (glass transition temperature) just below ambient temperature, for example methyl acrylate, polyethyl acrylate and n hexyl ethacrylate. We prefer an adhesive which exhibits at least a 3 fold, preferably 3-20 fold, especially about 10 fold increase in peel strength after heating, other conditions being equal. An increase in peel strength can be achieved by the application of large pressures, but it is an advantage of the invention to combine ease of application, with a rugged permanent product.

Preferably the flow temperature of the adhesive lies between about 50°C and about 100°C, more preferably between 72 and 90°C, especially about 85°C. If the flow temperature is too high, damage would result to the substrate, for example a telecommunications or electric cable, and if the flow temperature is too low long term adhesion may suffer, especially in high ambient temperatures.

Advantageously, the adhesive also has the property of adhering to unprepared substrates. In the context it is noted·that usually substrates such as polyethylene cables need to be treated, for example flame brushed, before an adhesive can be successfully applied thereto.

The thickness of the adhesive may be between 0.2mm and 1.0mm, that is to say thickness typical of hot-melt adhesives, and preferably is thick enough so as to provide a mechanical protection layer for the identification means should there be any peeling from the substrate.

The transparent sheet may be of polyethylene, EVA or a co-polymer thereof, and of a thickness sufficient to provide mechanical protection for the identification means and yet not too thick so as to produce heat transfer problems on installation. The thickness may be around 0.5mm to 1mm for example. The sheet is preferably UV resistant, preferably to ASTM D2565 or to CNET for outside exposure.

The transparent sheet may be secured to the adhesive sheet along a peripheral portion of the transparent sheet, preferably by the adhesive itself.

In accordance with another aspect of the invention, there is provided identification-carrying means comprising a sheet of heat-resistant transparent material, a sheet of adhesive that is pressure-sensitive and heat-activatable, and substantially planar identification means, the identification means being disposed between said two sheets.

A release layer may be provided to cover at least a part, and preferably all of that surface of the adhesive sheet facing away from the transparent sheet.

The transparent sheet is preferably x-linked, and may be heat-recoverable.

The identification means may be, for example, an element having a surface bearing indicia, for example, numbers of letters. In general, however, the identification means will be supplied as an unmarked strip of paper or other material which can be written on or otherwise marked in the field.

It is an advantage of the generally-planar configuration of the identification-carrying means according to the present invention that it can be applied to a body, such as a cable equally well after installation of the cable as during installation, since the identification-carrying means need only to be placed on or wrapped around the cable sheath.

The identification-carrying means allows use of an identification means which can conveniently be marked by the installer during installation by writing or typing etc, thereby obviating the need to stock or to carry around large quantities of numbers and letters in order to be sure of having the required code combination.

Furthermore since the identification-carrying means of the present invention can be secured to, rather than completely encircle a body, any given size of identification-carrying means may conveniently and inexpensively be used to mark bodies of a wide range of size and shape. The range of substrates which can be marked by such a versatile system is
of course large, especially since the marker need not be
wrapped around the article and since the dual-function
adhesive allows a high-performance bond to be achieved.
Typical applications in the telecommunications field,
however, include : man-hole cable numbering, closure identification,
duct numbering, pole numbering, cabinet marking, tool-kit
identification, marking of monitoring equipment, and warning
signs.

Two embodiments of identification-carrying means,
each in accordance with the present invention, will now be
described, by way of example, with reference to the accompanying
drawings, in which:

Figure 1 is a perspective view of the first embodiment
of the identification-carrying means;

Figure 2 shows an identification means for insertion,
in use, into the identification-carrying means of
Figure 1;

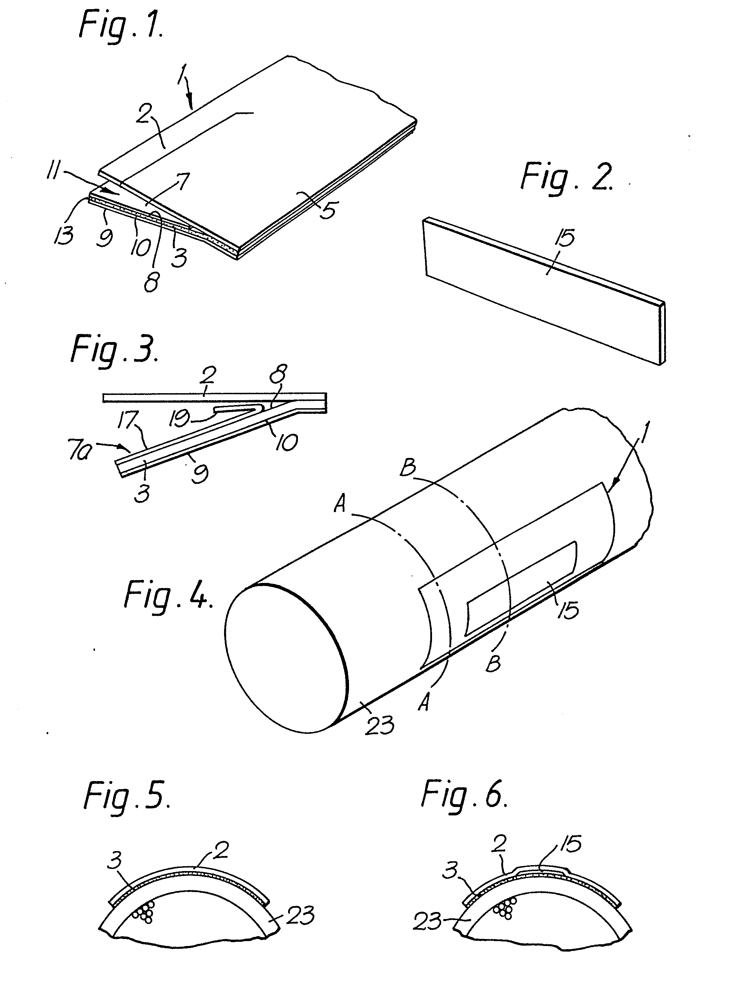

Figure 3 is a side elevation of the second embodiment of
the identification-carrying means;

Figure 4 is a perspective view of a cable having the
identification carrying means of Figure 1 secured
thereto; and

Figures 5 and 6 are cross-sectional views along
lines A-A and B-B respectively of Figure 4.

Referring to Figure 1, an identification-carrying means
1 comprises a transparent sheet 2 of flexible cross-linked
polymeric material  overlying a sheet 3 of pressure-sensitive
hot-melt adhesive. The sheets 2 and 3 measure 9.5cm by 4cm.

The sheet 2 is 0.7mm thick and the sheet 3 is 0.3mm thick.
The sheet 2 is secured by the adhesive to the sheet 3 along
a peripheral portion 5. The transparent sheet 1 covers
substantially the whole area of the adhesive sheet 3 and is
coterminous therewith. A layer of release paper 7 covers
the upper surface of the adhesive sheet 3 that faces the
transparent sheet 1 except for the peripheral portion 5
which is bonded to the transparent sheet 2. The release
layer 7 provides a space 11 between the transparent sheet 2
and the adhesive sheet 3. A further layer of release paper 9
covers the lower surface 10 of the adhesive sheet 2. The
release papers 7 and 9 are shown as separate sheets but it
is envisaged that the papers 7 and 9 might be integral. In
the latter configuration, a single release paper may cover
both the upper and lower surfaces 8 and 10 of the adhesive
sheet 3, folding back on itself around the side edge 13 of
the adhesive sheet 3.

Figure 2 shows an identification means in the form of a
substantially planar paper label 15. In use, indicia such as
numbers and letters may be marked on the label 15 and then
the label inserted into the space 11 between the transparent
sheet 2 and adhesive sheet 3. In the embodiment of identification-
carrying means shown in Figure 3, a release paper 7a is
provided such that only a first portion 17 thereof is in
contact with the adhesive sheet 3, the remaining portion 19
being folded back into the space 11 and overlying the
first portion 17. This arrangement is desirable in that it
facilitates removal of the release paper 7a from the adhesive
sheet 3 by providing a free end on the portion 19 which may
be pulled to peel the release paper from the adhesive sheet
3.

Figure 4 shows the identification-carrying means 1 with
the release paper 9 removed, the label 15 inserted, and the
resulting article secured to a cable 23.

A suitable sequence of steps which may be carried out to mark the cable 23 with the identification-carrying means 1, is as follows. Firstly the release paper 7 is removed from the upper surface 8 of the adhesive sheet 3 and the label 15 bearing the desired identifying indicia inserted into the space 11 between the transparent and adhesive sheets 2 and 3. The sheets 2 and 3 are then pressed into contact with sufficient pressure to activate the pressure sensitive adhesive thereby to secure the label 15 therebetween. The release paper 9 is then removed from the lower surface 10 of the adhesive sheet 3 and the exposed lower surface 10 then pressed into contact with the cable 23. Heat is then applied to activate the hot melt adhesive 2, so that the identifying means 15 is securely retained between the transparent sheet 2 and the cable 23.

It will thus be appreciated that a particularly simple and convenient form of identification-carrying means is provided by selecting the adhesive to be both pressure-sensitive and heat-activatable. The pressure-sensitive property not only allows the identification means to be properly secured to the transparent sheet, but also allows these two components to be well-secured, at least temporarily, to a substrate until and whilst heat is applied to ensure a more permanent bonding provided by the heat-activatable property of the adhesive.

Figures 5 and 6 show cross-sections through the cable of Figure 4 taken at sections A-A and B-B respectively. From Figures 4, 5 and 6 it can be seen that the identification label 15 is secured by the adhesive all around its circumference between the transparent top sheet 2 and the outer jacket 24 of the substrate cable 23.

CLAIMS

1.    Identification-carrying means comprising a sheet of heat-resistant transparent material secured to a sheet of adhesive that is pressure-sensitive and heat-activatable, at least part of one major surface of the adhesive sheet being covered by a release layer to define a space between said sheets for receiving, in use, identification means.

2.    Identification-carrying means according to Claim 1, wherein said adhesive comprises a tackified thermoplastic rubber.

3.    Identification-carrying means according to Claim 1, wherein said adhesive comprises pressure-sensitive silicone-based adhesive.

.4.    Identification-carrying means according to Claim 1, wherein said adhesive comprises a hot-melt acrylic adhesive having a glass transition temperature just below ambient temperature.

5.    Identification-carrying means according to any preceding claim, wherein said sheets are of generally rectilinear form, and wherein the securement is effected between said sheets at an overlying portion along one edge only.

6.    Identification-carrying means according to any preceding claim, wherein said securement of the sheets is effected by the adhesive.

7.    Identification-carrying means according to any preceding claim, wherein said release layer is arranged such that only part thereof is in contact with the adhesive sheet, the remainder providing a gripping portion to facilitate removal of the release layer.

8. Identification-carrying means according to any preceding claim, wherein said gripping portion is folded back over the said contacting part and is disposed within said space between the transparent sheet and the adhesive sheet.

9. Identification-carrying means according to any preceding claim, wherein the transparent sheet is formed from cross-linked polymeric material.

10. Identification-carrying means according to any preceding claim, wherein the transparent sheet is heat-recoverable.

11. Identification-carrying means according to any peceding claim, comprising a release layer covering at least part of that surface of the adhesive sheet which faces away from said transparent sheet.

12. Identification-carrying means according to any preceding claim, wherein the transparent sheet and the adhesive sheet are of substantially the same configuration and area.

13. Identification-carrying means according to any preceding claim, having identification means between said sheets.

14. Identification-carrying means according to Claim 13, in which the identification means is paper.

15. Identification-carrying means according to any preceidng claim, in the form of a roll in which the several components run lengthwise of the material of the roll.

16. A kit-of-parts which comprises an identification-carrying means according to Claim 15, and a roll of identification means having a width not greater than the width of said space.

17. A kit-of-parts according to Claim 16, in which the roll of identification means is a roll of paper.

18. A body having secured thereto identification-carrying means according to any preceding claim.

*Fig.1.*

*Fig.2.*

*Fig.3.*

*Fig.4.*

*Fig.5.*

*Fig.6.*